# EUROPÄISCHE PATENTSCHRIFT

(11) **EP 1 009 652 B1**
(45) Veröffentlichungstag und Bekanntmachung des Hinweises auf die Patenterteilung: **12.02.2003**
(21) Anmeldenummer: 98951231.4
(22) Anmeldetag: 28.08.1998
(51) Int. Cl.: B62K 15/00

(54) **ZWEIRADRAHMEN**
BICYCLE FRAME
CADRE DE DEUX-ROUES

(30) Priorität: 04.09.1997 DE 19738778; 05.09.1997 DE 19738969; 04.08.1998 DE 19835242
(43) Veröffentlichungstag der Anmeldung: 21.06.2000
(73) Patentinhaber: Georg Fritzmeier GmbH & Co., D-85655 Grosshelfendorf (DE)
(72) Erfinder: KUBA, Vladislav, D-83109 Grosskarolinenfeld (DE)
(74) Vertreter: Winter, Brandl, Fürniss, Hübner, Röss, Kaiser, Polte, Partnerschaft
(86) Internationale Anmeldenummer: DE9802536
(87) Internationale Veröffentlichungsnummer: WO99011511

(56) Entgegenhaltungen:
- BE-A- 690 238
- DE-A- 4 423 647
- DE-U- 29 513 779
- FR-A- 1 514 213
- NL-A- 6 401 631

## Beschreibung

Die Erfindung betrifft einen Zweiradrahmen gemäß dem Oberbegriff des Patentanspruchs 1 und eine Kupplungseinrichtung, insbesondere zur Verbindung eines derartigen Zweiradrahmens.

In den vergangenen Jahren gingen Automobilhersteller in zunehmendem Maße dazu über, neben den Fahrzeugen auch andere markenspezifische Produkte anzubieten. Ein besonderer Schwerpunkt ist dabei auf hochwertige Fahrräder gerichtet, die vom Automobilhersteller unter ihrer Marke bei den Händlern angeboten werden, die somit in unmittelbarer Konkurrenz zu Fahrradhändlern stehen. Die Räder sind in der Regel hinsichtlich der Konstruktion an diejenige Zielgruppe angepaßt, die der jeweilige Automobilhersteller mit seinen Autos erreichen will. So bieten Sportwagenhersteller in der Regel sehr sportliche Rennräder und Moutainbikes an, während andere Unternehmen den Schwerpunkt auf Touren- oder Trekkingräder gerichtet haben. Die Hersteller bieten zusätzlich noch Trägersysteme an, die konstruktiv an den Kraftfahrzeugtyp und an das Fahrrad angepaßt sind.

Seit kurzem werden von führenden Automobilherstellern sog. "Roadster" verkauft, d.h., zweisitzige Cabriolets mit vergleichsweise eingeschränktem Kofferraumvolumen, deren Konzept im wesentlichen auf maximalen Fahrspaß und weniger auf maximales Transportvolumen gerichtet ist. Derartige Roadster sind in der Regel als Cabrio oder mit abnehmbaren oder einfahrbaren Dachelementen versehen, so daß die Befestigung der Dachträgersysteme Schwierigkeiten bereitet. Diese Fahrzeuge sind sehr kompakt ausgeführt, so daß ein Dachtransport eines großen Rades ästhetischen Ansprüchen nicht genügt. Man ist daher bestrebt, die Räder mit teilbaren Rahmen auszuführen, so daß ein einfacher Dachträgertransport möglich ist.

In dem deutschen Gebrauchsmuster 295 13 779 wird ein Sportrad mit einem teilbaren Carbonrahmen vorgestellt, der über eine Steckverbindung teilbar ist, wobei die Fixierung der Rahmenteile mittels eines Schnellverschlusses erfolgt. Bei dieser Steckverbindung wird ein Endabschnitt des einen Rahmenteiles in den entsprechend ausgeführten Endabschnitt des anderen Rahmenteiles eingeschoben, wobei die vorgesehene Passung einerseits ein zusammenfügen der Rahmenteile mit wenig Kraftaufwand und andererseits eine exakte Führung der Rahmenbauteile zueinander gewährleisten muß.

Bei derartigen Stecksystemen kann es jedoch vorkommen, daß im Überlappungsbereich Verschmutzungen anhaften, so daß das Zusammenfügen oder Auseinandernehmen der Rahmenteile erschwert ist. Derartige Verschmutzungen können die Steckpassung beschädigen, so daß die Lebensdauer des Rahmens negativ beeinflußt ist. Ein weiteres Problem ist, daß diese Steckpassung mit höchster Präzision gefertigt werden muß, so daß ein erheblicher vorrichtungs- und fertigungstechnischer Aufwand betrieben werden muß.

Bei diesen hochwertigen Rädern werden die Übertragungselemente zur Betätigung der Schaltung und der Hinterradbremse üblicherweise im Rahmen verlegt, so daß die Anmutung des Rahmens nicht durch Bowdenzugführungen etc. beeinträchtigt ist. Bei teilbaren Rädern besteht ein Problem dahingehend, daß diese Betätigungseinrichtungen (Bowdenzüge) die Trennebene der Rahmenteile durchsetzen und daher mit entsprechenden Kupplungseinrichtungen versehen sein müssen. In der vorgenannten Schrift wird dazu vorgeschlagen, die Bowdenzüge mittels eines hydraulischen Systems zu kuppeln. Alternativ wird eine mechanisch wirkende Hebelkonstruktion offenbart, bei der die Bowdenzüge in jedem Rahmenteil an einem Schwenkhebel angelenkt sind, und die Schwenkbewegung der Hebel zur Übertragung der Betätigungskräfte verwendet wird. Die Realisierung beider Konstruktionsvarianten erfordert einen erheblichen vorrichtungstechnischen Aufwand, der den Preis des Rahmens nicht unerheblich beeinflußt. Ein weiteres Problem liegt darin, daß die komplizierten Kupplungssysteme verschmutzungsanfällig sind und im harten Dauerbetrieb nicht die erforderliche Zuverlässigkeit aufwiesen.

Aus der FR-A-1514213 ist ein teilbarer Fahrradrahmen bekannt, bei dem ein Unterrohr des Rahmens entlang einer Trennebene in zwei Rahmenteile teilbar ist und von dem die vorliegende Erfindung ausgeht. Vorgesehen ist eine Verbindungseinrichtung zum lösbaren Zusammenfügen der zwei Rahmenteile an der Trennebene, wobei die Verbindungseinrichtung ein Widerlager mit einem Stützelement, das sich von einem Rahmenteil durch eine die Trennebene enthaltende Ebene hindurch zu einem Auflager im anderen Rahmenteil erstreckt, und eine Spanneinrichtung aufweist zum Verspannen der beiden Rahmenteile, so daß das Stützelement am Auflager abgestützt ist und die beiden Rahmenteile stirnseitig aneinander liegen, wobei die Trennebene ein Unterrohr im Zweiradrahmen durchsetzt.

Hierbei verläuft die Trennebene im wesentlichen senkrecht zur Längsachse des Unterrohrs. Dies und die gewählte Ausbildung der Verbindungseinrichtung in Form eines einfachen Spannbügels machen diesen bekannte Fahrradrahmen nur gering belastbar. Insbesondere zur Verwendung in sog. ATBs (All-Terrain-Bikes) oder Mountain-Bikes dürfte er völlig unzureichend sein.

Demgegenüber liegt der Erfindung die Aufgabe zugrunde, einen teilbaren Rahmen für ein Zweirad und ein Kupplungssystem, insbesondere für derartige teilbare Rahmen zu schaffen, die bei minimalem Vorrichtungstechnischen Aufwand eine zuverlässige Verbindung der Bauteile ermöglichen.

Diese Aufgabe wird hinsichtlich des Rahmens durch die Merkmale des Patentanspruchs 1 gelöst.

Bei dem erfindungsgemäßen Fahrradrahmen ist das Stützelement demnach ein in einem Unterrohrteil befestigter Haken und das Widerlager ein im anderen Unterrohrteil angeordneter Bolzen, der vom Haken abschnittsweise umgriffen ist, und der umgreifende Abschnitt des Hakens überträgt eine in Richtung der Zweiradhochachse wirkende Kraftkomponente auf den Bolzen.

Hierdurch wird eine hochfeste Verbindung ermöglicht: die Aufteilung in Widerlager/Stützelement und Spanneinrichtung, sowie die Auflage entlang der Stirnseite ermöglichen es, extrem hohe Rahmenkräfte zu übertragen, so daß der Zweiradrahmen auch höchsten Anforderungen, beispielsweise bei Down-Hill-Wettbewerben genügt.

Die Rahmenteile sind besonders einfach zusammenfügbar, da das Stützelement hakenförmig ausgebildet ist und dieser hakenförmige Abschnitt auf einem Bolzen abgestützt wird. Die Stützrichtung ist dabei derart gewählt, daß sie etwa in Richtung der durch den Fahrer in den Rahmen eingeleiteten Kräfte erfolgt, so daß das Gewicht des Fahrers selbst dazu beiträgt, die Verbindung zwischen dem Stützelement und dem Widerlager aufrecht zu erhalten. Die hakenförmige Ausgestaltung des Stützelements ermöglicht es des weiteren, die beiden Rahmenteile bei gelöster Spanneinrichtung gegeneinander zu verschwenken, wobei diese Schwenkbewegung durch Eingriff des hakenförmigen Teils des Stützelements am Bolzen geführt ist.

Da im wesentlichen keine Gleitpassungen erforderlich sind, ist eine Beschädigung der Rahmenpassung durch Verschmutzung nahezu ausgeschlossen. Der erfindungsgemäße Aufbau der Verbindungseinrichtung ermöglicht darüber hinaus ein einfaches Reinigen der Bauelemente vor dem Zusammenfügen, so daß einer Fehlfunktion durch Klemmen etc. vorgebeugt ist. Da die kraftschlüssige Verbindung über die Spanneinrichtung und das Widerlager/Stützelement erfolgt und die Spannkraft durch entsprechende Nachjustierung der Spanneinrichtung veränderbar ist, können Fertigungstoleranzen oder Verschleiß der Fügestelle ohne negative Beeinträchtigung in der Paßqualität durch Nachjustierung der Spannkraft ausgeglichen werden.

Relativverschwenkungen der beiden Rahmenteile zueinander werden erleichtert, wenn die Stirn- oder Auflagefläche eines der Rahmenteile im Bereich des Widerlagers ausgenommen ist, so daß eine Verschwenkung der Rahmenteile um das Widerlager ohne Kollision der Stirnflächen ermöglicht ist.

Die Spanneinrichtung hat bevorzugt einen schwenkbar gelagerten Spannhaken, dessen Hakenabschnitt mit einem am anderen Rahmenbauteil befestigten Spannbolzen in Eingriff bringbar ist. Diese Spanneinrichtung kann beispielsweise als Kniehebel ausgeführt sein. Bevorzugt wird es jedoch, den Spannhaken auf einer Exzenterwelle zu lagern, die mittels eines Spannhebels drehbar ist. Durch die exzentrische Lagerung des Spannhakens kann beim Schließen der Spanneinrichtung eine vorbestimmte Spannkraft aufgebracht werden, die die beiden Rahmenteile zusammenhält und das Stützelement auf das Widerlager preßt.

Eine besonders glattflächige Konstruktion erhält man, wenn der Spannhebel zum Verriegeln zum Spannhaken hin verschwenkbar ist und dabei in eine Ausnehmung an der Außenfläche der Rahmenteile eintaucht, so daß der Spannhebel bündig im Rahmen aufgenommen ist.

Der Rahmen wird vorzugsweise aus hochfestem Kunststoff, beispielsweise aus Carbonfaser hergestellt, wobei die Anlageabschnitte der Rahmenbauteile und die Spannvorichtung selbst in Gehäuseteilen aus Metall ausgebildet sind, die vorzugsweise in den Kunststoffrahmen eingebettet werden. Durch diese Materialkombination ist einerseits ein sehr leichter Rahmen ermöglicht, andererseits wird durch die metallische Ausgestaltung der Gehäuseteile ein Verschleiß des Rahmens in der Trennfuge auf ein Minimum reduziert.

Die Kupplungen zur Verbindung der Betätigungseinrichtung für die Bremse und für die Schaltung wird vorzugsweise mit Klauen ausgebildet, die durch eine Relativbewegung der beiden Rahmenteile beim Zusammenfügen oder Auseinandernehmen des Rahmens in Eingriff bzw. außer Eingriff bringbar sind. Durch diese formschlüssige Verbindung der Betätigungseinrichtungen - vorzugsweise Bowdenzüge - müssen keine zusätzlichen Kupplungseinrichtungen wie beim vorbeschriebenen Stand der Technik (Hydraulikkomponenten, Schwenkhebel) vorgesehen werden, so daß der Bauraum für die Kupplungseinrichtung minimal ist.

Die erfindungsgemäßen Klauen mit wechselseitig ausgebildeten Eingriffsvorsprüngen und Aufnahmenuten (Verzahnung) sind vorzugsweise seitlich zur Längsachse der Betätigungseinrichtung (Bowdenzug) orientiert, so daß die Kupplungs-/Entkupplungsbewegung nicht in Längsrichtung der Bowdenzüge sondern in Querrichtung dazu erfolgt.

Die Kupplungsteile werden durch eine Relativverschwenkung der Rahmenteile zusammengefügt bzw. entkuppelt.

In einer weiteren und als besonders vorteilhaft erachteten Ausführungsform ist die Spanneinrichtung im zusammengefügten Zustand der beiden Rahmenteile von einem Niederhalter kraftbeaufschlagt, welcher mittel- oder unmittelbar mit einer Sattelstrebe des Zweiradrahmens in Verbindung steht. Dadurch, daß die Spanneinrichtung im zusammengefügten Zustand der beiden Rahmenteile von dem Niederhalter kraftbeaufschlagt ist, der mittel- oder unmittelbar mit der Sattelstrebe des Zeitradrahmens in Verbindung steht, erfolgt zunächst in vorteilhafter Weise eine zusätzliche Sicherung der Verbindung zwischen den beiden Rahmenteilen durch das über die Sattelstrebe auf den Niederhalter wirkende Gewicht der das Zweirad fahrenden Person. Weiterhin kann die Sattelstrebe quasi als Öffnungshebel beim Trennen der beiden Rahmenteile verwendet werden, so daß das Öffnen der Spanneinrichtung zum Lösen der beiden Rahmenteile voneinander über den größeren Hebel der Sattelstrebe mit entsprechend geringerem Kraftaufwand erfolgen kann. Umgekehrt kann auch das Zusammenspannen der beiden Rahmenteile bei deren Verbindung über den durch die Sattelstrebe zur Verfügung gestellten längeren Hebel mit geringerem Kraftaufwand erfolgen. Schließlich wird in vorteilhafter Weise dadurch, daß die Sattelstrebe mit der Spannvorrichtung mittel- oder unmittelbar in Verbindung steht, erreicht, daß die Sattelstrebe zusammen mit dem sich hierin befindlichen Sattel im voneinander getrennten Zustand der beiden Rahmenteile gegenüber einem der Rahmenteile zusätzlich verschwenkbar ist, so daß das Packmaß noch weiter verringert werden kann.

Hierbei kann weiterhin der Spannhebel den Niederhalter bilde, der mittel- oder unmittelbar mit der Sattelstrebe des Zweiradrahmens in Verbindung steht.

Der Spannhebel kann zum Verriegeln zusammen mit der Sattelstrebe zum anderen Rahmenteil hin verschwenkbar ist, so daß er mit einem Anlageabschnitt in eine Ausnehmung des anderen Rahmenteils eintaucht.

Die Trennebene ist vorzugsweise etwa 45° zur Unterrohrlängsachse angestellt.

Sonstige vorteilhafte Ausgestaltungen der Erfindung sind Gegenstand der weiteren Unteransprüche.

Im folgenden werden bevorzugte Ausführungsbeispiele der Erfindung anhand der Zeichnung näher erläutert.

Es zeigt:
Fig. 1 eine schematische Ansicht eines Fahrrades, das mit dem erfindungsgemäßen Rahmen ausgerüstet ist;
Fig. 2 eine Schnittdarstellung einer Verbindungseinrichtung des Rahmens aus Fig. 1;
Fig. 3 einen Querschnitt durch die Verbindungseinrichtung aus Fig. 2;
Fig. 4 die Verbindungseinrichtung aus Fig. 2 in zusammengebautem Zustand;
Fig. 5 eine Exzenterwelle der Verbindungseinrichtung aus Fig. 2;
Fig. 6 einen Spannbolzen der Verbindungseinrichtung aus Fig. 2;
Fig. 7 bis 12 Bewegungsanimationen des Verbindungselementes aus Fig. 2;
Fig. 13 bis 16 Bewegungsanimationen einer Kupplungseinrichtung des Verbindungselementes aus Fig. 2;
Fig. 17 eine schematische Teilansicht eines Fahrrades, das mit einer weiteren Ausführunmgsform eines erfindungsgemäßen Rahmens ausgerüstet ist;
Fig. 18 eine vergrößerte, teilweise aufgeschnittene Darstellung einer Verbindungseinrichtung des Rahmens aus Fig. 17;
Fig. 19 bis 21 den Ablauf beim Trennen der beiden Rahmenteile aus Fig. 17 oder Fig. 18;
Fig. 22 und 23 zwei verschiedene Ausgestaltungsformen eines mit dem Rahmen von Fig. 17 ausgestatteten Fahrrades; und
Fig. 24 ein mit dem Rahmen von Fig. 17 ausgestattetes Fahrrad mit Hilfsmotor oder Motor-Bike.

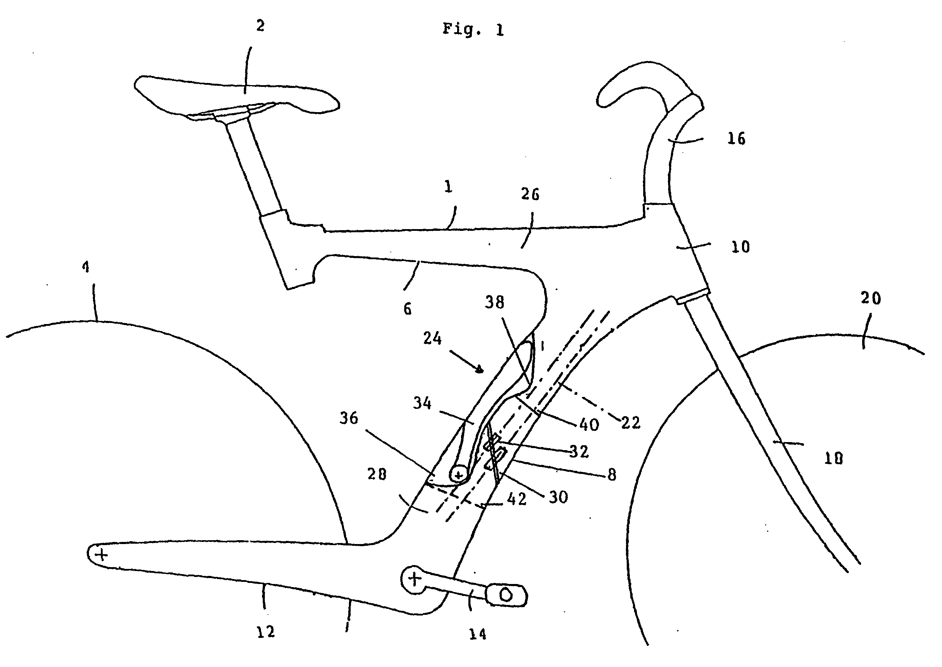

Fig. 1 zeigt eine schematische Darstellung eines erfindungsgemäßen Rahmens 1 für ein Sportrad. Dieser Rahmen 1 ist beim gezeigten Ausführungsbeispiel aus hochfestem Kunststoff, beispielsweise aus Carbonfasern hergestellt und hat daher ein äußerst geringes Gewicht. Bei dem dargestellten Rad wurde eine selbstfedernde Rahmenform gewählt, bei der kein in herkömmlicherweise geschlossenes Rahmendreieck verwendet wird, sondern bei der ein Sattel 2 und eine Lagerung des Hinterrades an frei auskragenden Rahmenendabschnitten angeordnet sind, die somit eine gewisse Eigenelastizität aufweisen.

Dazu kann der Rahmen in der Darstellung nach Fig. 1 U-förmig ausgestaltet werden, so daß ein etwa waagrecht verlaufendes Oberrohr 6 und ein schräg nach unten verlaufendes Unterrohr 8 in einem Lenkkopf 10 zusammengeführt sind. Das vom Lenkkopf 10 schräg nach unten verlaufende Unterrohr 8 geht in eine gabelförmige Hinterradaufnahme 12 über, wobei in der Darstellung nach Fig. 1 lediglich ein Schenkel der Hinterradaufnahme 12 zu sehen ist. An den beiden Endabschnitten der gabelförmigen Hinterradaufnahme 12 sind nicht dargestellte Gabelendstücke zur Aufnahme der Hinterradlagerung vorgesehen. Im Verbindungsbereich zwischen der Hinterradaufnahme 12 und dem Unterrohr 8 ist das Tretlager mit den dazugehörigen Tretkurbeln 14 gelagert. Im Lenkkopf 10 sind ein Lenker 16 und eine Vorderradgabel 18 für ein Vorderrad 20 gelagert.

Wie in Fig. 1 strichpunktiert angedeutet ist, sind im Rahmen 1 selbst Bowdenzüge 22 geführt, die zur Betätigung der nicht dargestellten Hinterradbremse und der Schaltung dienen und dabei diese Elemente mit den entsprechenden Einrichtungen am Lenker (Handbremshebel, Schalthebel (Gripshift)) verbinden. Durch die Verlegung der Bowdenzüge 22 innerhalb des Rahmens sind diese zuverlässig gegen Beschädigung oder Verschmutzung geschützt und die ästhetische Anmutung des Rahmens ist darüber hinaus wesentlich ansprechender als bei Rahmen, bei denen die Bowdenzüge außerhalb, entlang der Rahmenumfangsfläche geführt sind.

Der erfindungsgemäße Rahmen 1 ist mit einer Verbindungseinrichtung 24 versehen, über die das Unterrohr 8 in zwei Unterrohrteile trennbar ist, so daß der Rahmen 1 in zwei vollständig getrennte Rahmenteile 26, 28 zerlegbar ist. Dabei sind am Rahmenteil 28 das Tretlager mit den Tretkurbeln 14, die Hinterradaufnahme 12 und das Hinterrad gelagert, während am oberen Rahmenteil 26 der Sattel 2, der Lenker 16, die Vorderradgabel 18 und das Vorderrad 20 angeordnet sind. Um eine vollständige Unterteilung zu ermöglichen, sind die Bowdenzüge im Bereich der Trennebene 30 des Unterrohrs 8 mit lösbaren Kupplungen oder Kupplungseinrichtungen 32 versehen.

Die Betätigung der Verbindungseinrichtung 24 erfolgt mittels eines Spannhebels 34, der bei dem gezeigten Ausführungsbeispiel am unteren Rahmenteil 28 gelagert ist und der im Schließzustand, d.h. bei zusammengekuppelten Rahmenteilen 26, 28 zum oberen Rahmenteil 26 hin verschwenkt ist und an dessen Außenumfangsfläche anliegt. Um eine bündige Anlage des Spannhebels 34 zu ermöglichen, ist das Unterrohr 8 im Schwenk-/Anlagebereich des Schwenkhebels 34 mit einer Ausnehmung 36 versehen, in die der Schwenkhebel 34 in der gezeigten Position eintaucht, so daß der Rahmen im Bereich der Trennebene 30 möglichst glattflächig, ohne überstehende Teile ausgeführt ist. Die Ausnehmung 36 ist in dem in Fig. 1 oberen Abschnitt mit einer Eingriffsausnehmung 38 ausgeführt, so daß der Schwenkhebel 34 in seiner dargestellten Position besser erreichbar ist. Wie weiterhin aus der Darstellung gemäß Fig. 1 hervorgeht, verläuft die Trennebene 30 bei dem gezeigten Ausführungsbeispiel etwa in Vertikalrichtung, d.h. parallel zur Hochachse des Fahrrades. Selbstverständlich kann die Trennebene auch in anderer Weise gelegt werden. Der guten Ordnung halber sei angefügt, daß die Erfindung selbstverständlich nicht auf den dargestellten U-förmigen Fahrradrahmen beschränkt ist, sondern daß jedwede Rahmenkonstruktion einsetzbar ist.

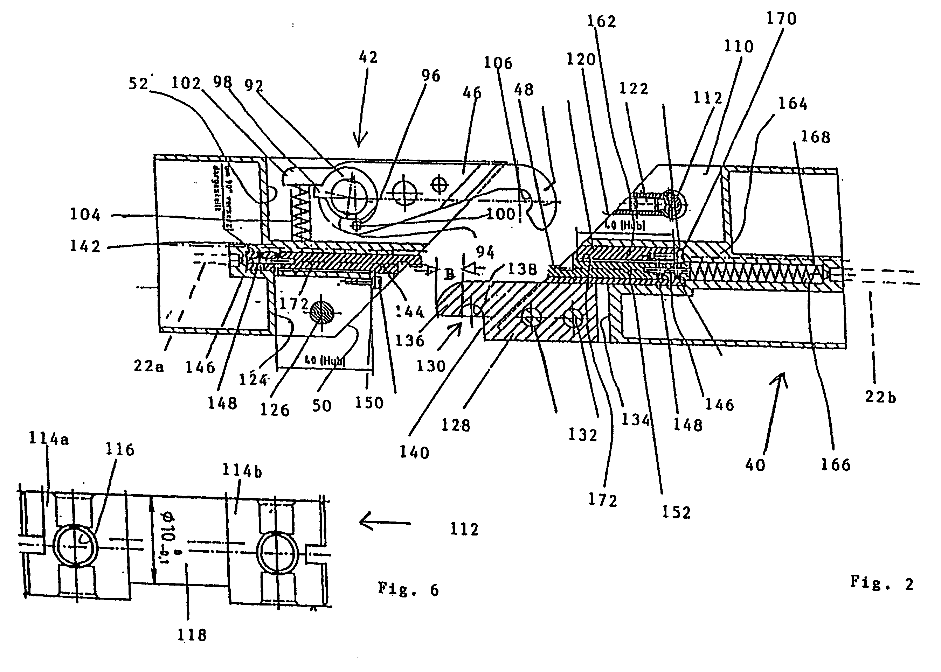

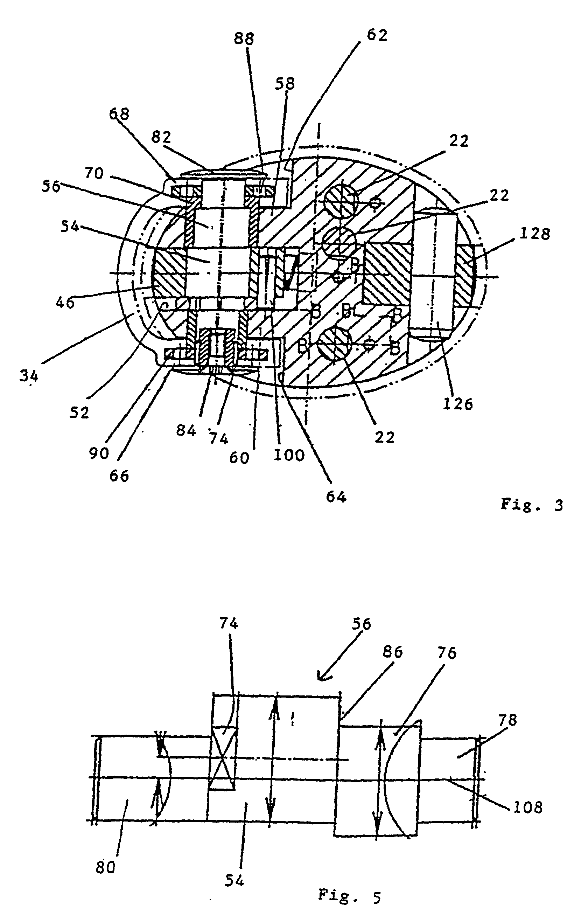

Wie in Fig. 1 gestrichelt angedeutet ist, wird die Verbindungseinrichtung 24 nicht direkt an den Unterrohrteilen gelagert, sondern diese sind mit als Einsatzteile ausgeführten Gehäusen 40, 42 versehen, entlang deren Stirnflächen die Trenn-/Anlageebene 30 ausgebildet ist und in denen die Lagerungen der Verbindungseinrichtung 24 vorgesehen sind. Durch das Vorsehen der Gehäuse 40, 42 im Bereich der Trennebene 30 wird eine Verbindungseinrichtung mit extrem hoher Festigkeit und geringem Gewicht ausgebildet. In Fig. 2 ist ein Längsschnitt der als Einsatz ausgebildeten Gehäuseteile 40, 42 in entkuppeltem Zustand dargestellt. Die beiden Gehäuse 40, 42 sind in Leichtbauweise aus einer Aluminiumlegierung gegossen. Wie aus der Zusammenbaudarstellung gemäß Fig. 3 hervorgeht, haben die beiden Gehäuse 42 (unteres Gehäuse) und 40 (oberes Gehäuse) einen elliptischen Querschnitt, wobei die Längsachse der Ellipse in der Hochachse des Rahmens 1 liegt, so daß eine optimale Biege- und Torsionssteifigkeit des Rahmens 1 gewährleistet ist.

Gemäß Fig. 2 ist im unteren Gehäuse 42 ein Spannhaken 46 der Verbindungseinrichtung 24 gelagert. Dieser Spannhaken 46 hat einen hakenförmig gekrümmten Endabschnitt 48, der aus einer als Schrägfläche ausgebildeten Stirnfläche 50 des unteren Gehäuseteils 42 in Richtung zum oberen Gehäuseteil 40 hervorsteht. Der Spannhaken 46 ist in einer Aufnahmeausnehmung 52 des unteren Gehäuses 42 aufgenommen. Diese Aufnahmeausnehmung 52 ist in der Darstellung gemäß Fig. 3 im Querschnitt gezeigt. Diese Darstellung zeigt einen Schnitt entlang der Linie A-A in Fig. 4 (links). Demgemäß ist der Spannhaken 46 auf dem Exzenter 54 einer Exzenterwelle 56 gelagert, deren Endabschnitte zwei die Aufnahmeausnehmung 52 seitlich begrenzende Lagerwandungen 58, 60 des unteren Gehäuseteils 42 durchsetzen und in Randausnehmungen 62, 64 des Gehäuses 42 hinein ragen.

An diesen in die Randausnehmungen 62, 64 hinein ragenden Endabschnitten der Exzenterwelle 56 ist der Spannhebel 34 gelagert, wobei zwei Lagerabschnitte 68, 66 des Spannhebels 34 von diesen Endabschnitten der Exzenterwelle 56 durchsetzt sind. Der Spannhebel 34 hat in der Darstellung nach Fig. 3 ein kreisbogenförmig gekrümmtes Profil, das an den Krümmungsradius der Gehäuseaußenwandungen angepaßt ist, so daß das Gehäuse im Bereich zwischen den beiden Endabschnitten der Exzenterwelle 46 vom Spannhebel 34 und den beiden Lagerabschnitte 66, 68 abschnittsweise umgriffen ist.

Zur Axialfestlegung der Exzenterwelle 56 ist in den Lagerwandungen 58, 60 jeweils eine Lagerbuchse 70, 72 eingesetzt.

In Fig. 5 ist die Exzenterwelle 56 in vergrößerter Darstellung gezeigt.

Demgemäß ist der etwa in der Mitte liegende Exzenter 54 mit zwei diametral angeordneten Planflächen 74 ausgebildet. An die in Fig. 5 rechts liegende Stirnfläche des Exzenters 54 schließt sich ein zentrischer Wellenabschnitt 76 an, der in einen radial zurückgestuften Lagerbund 78 mündet, der den vorstehend beschriebenen Lagerabschnitt 68 des Spannhebels 34 durchsetzt. Der in Fig. 5 linke Endabschnitt der Exzenterwelle 54 ist durch einen zentrischen Lagerbund 80 gebildet, der die Lagerwandung 60 und den in Fig. 3 unteren Lagerabschnitt 66 durchsetzt. Die beiden Stirnflächen der Exzenterwelle 54 sind mit nicht dargestellten Gewindebohrungen versehen, in die Anschlagschrauben 82, 84 einschraubbar sind, die an den Außenseiten der Lagerabschnitte 66, 68 des Spannhebels 34 anliegen.

Die in Fig. 3 obere Lagerbuchse 70 ist mit dem unteren Endabschnitt (Fig. 3) an der Exzenterstirnfläche 86 zwischen dem Exzenter 54 und dem zentrischen Wellenabschnitt 76 abgestützt. Der von dieser Stirnfläche 86 entfernte Endabschnitt der Lagerbuchse 70 umgreift mit einem Radialbund die Radialschulter zwischen den Wellenabschnitten 76, 78 der Exzenterwelle 56.

Wie aus Fig. 3 hervorgeht, sind die Lagerabschnitte 66, 68 des Spannhebels 34 mit jeweils einem Innenschlitz 88 ausgebildet, der zur Aufnahme einer Lagerscheibe 90 dient. In der gezeigten Montageposition' ist die radialbundseitige Stirnfläche der Lagerbuchse 70 an der Großfläche der Lagerscheibe 90 abgestützt, d.h., die Lagerbuchse 70 erstreckt sich hin bis zur benachbarten Umfangswandung des Innenschlitzes 88 im Lagerabschnitt 68.

Im Bereich der Planflächen 74 ist auf dem Exzenter 54 eine Nockenscheibe 92 befestigt, deren Innenbohrung ebenfalls mit Planflächen ausgeführt ist, so daß diese drehfest mit der Exzenterwelle 56 verbunden ist. Die Nockenscheibe 92 (siehe Fig. 2) hat eine radial zurückgesetzte Umfangsnut 94, die an einem Ende eine Radialschulter 96 hat und an dem anderen Ende einen Mitnehmernocken 98 trägt, der in Radialrichtung über den Außenumfang der Nockenscheibe 92 hinaus steht. Der Spannhaken 46 ist drehbeweglich auf dem Exzenter 54 gelagert, wobei aus der in Fig. 2 dargestellten Großfläche ein Anschlagbolzen 100 vorsteht, der wahlweise in Anlage an die Radialschulter 96 oder den Mitnehmernocken 98 bringbar ist. D.h., die Verschwenkbarkeit des Spannhakens 56 um den Exzenter 54 ist durch die Anlage des Anschlagbolzens 100 an die Radialschulter 96 oder den Mitnehmernocken 98 begrenzt.

Gemäß Fig. 2 hat der Spannhaken 46 an dem vom hakenförmigen Endabschnitt 48 entfernten Endabschnitt einen Anlageschenkel 102, an dem eine Druckfeder 104 anliegt, die am Boden der Aufnahmeausnehmung 52 abgestützt ist. Durch diese Druckfeder 104 ist der Spannhaken 46 in die dargestellte Grundposition vorgespannt, wobei die Radialschulter 96 am Anschlagbolzen 100 anliegt. Durch Verschwenken des drehfest mit der Exzenterwelle 56 verbundenen Spannhebels 34 wird der Exzenter 54 gedreht, so daß der Abstand des hakenförmigen Endabschnitts 48 - oder genauer gesagt der Hakenfläche 106 des Spannhakens 46 - zur Drehachse 108 (Fig. 5) der Exzenterwelle entsprechend der Exzentrizität veränderbar ist, um eine Spannkraft aufzubringen oder zu verringern. In Fig. 2 befindet sich der Spannhaken 46 in einer Position, in der der Abstand zwischen der Hakenfläche 106 und der Drehachse 108 minimal ist, so daß in zusammengebautem Zustand die maximale Spannkraft aufgebracht wird. Bei einer Rückverschwenkung des Spannhebels 34 gelangt der Mitnehmernocken 98 in Anlage an den Anschlagbolzen 100, so daß die Drehbewegung der Nockenscheibe 92 auf den Spannhaken 46 übertragen wird, so daß dieser in der Darstellung nach Fig. 2 nach oben und links bewegt wird. Das Kuppeln und Entkuppeln der Verbindungseinrichtung wird im folgenden noch näher erläutert.

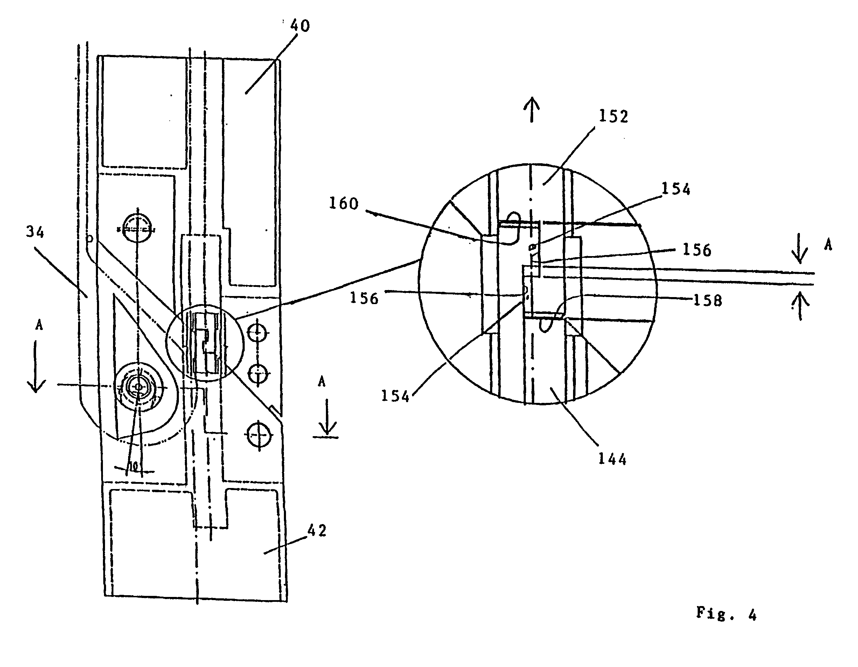

Das obere Gehäuse 40 ist - in der Darstellung nach Fig. 2 - in Verlängerung des Spannhakens 46 mit einer Eingriffsausnehmung 110 versehen, in die in gekuppeltem Zustand der hakenförmige Endabschnitt 48 eintaucht. Diese Eingriffsausnehmung 110 wird in Querrichtung (senkrecht zur Zeichenebene in Fig. 2) durch einen Spannbolzen 112 durchsetzt, der in Fig. 6 vergrößert dargestellt ist. Demgemäß hat der Spannbolzen 112 zwei zentrische Lagerbünde 114a, 114b, in denen jeweils drei rechtwinklig zueinander angeordnete Sacklochbohrungen 116 ausgebildet sind. Zwischen den beiden Lagerbünden 114a, 114b ist ein Spannexzenter 118 angeordnet, dessen Mittelachse gegenüber der Achse der Lagerbünde 114a,b versetzt ist.

Die Befestigung des Spannbolzens 112 in der Eingriffsausnehmung 110 erfolgt, indem die beiden Lagerbünde 114a, 114b in den entsprechenden Seitenwandungen der Eingriffsausnehmung 110 befestigt werden, wobei in diesen Seitenwandungen von der schräg verlaufenden Stirn/Anlagefläche 120 her Madenschrauben 122 einschraubbar sind, deren zylindrisch ausgeführte Endabschnitte in eine der Sacklochbohrungen 116 eintauchen, so daß der Spannbolzen 112 sowohl in Axialrichtung als auch drehfest im oberen Gehäuse 40 befestigt ist. Durch die drei zueinander angestellten Sacklochbohrungen 116 kann die Einbaulage des Exzenters vorgewählt werden, so daß Fertigungstoleranzen oder Verschleiß durch Verdrehen des Spannexzenters 118 ausgleichbar ist. Die Krümmung der Hakenfläche 106 ist an den Außendurchmesser des Spannexzenters 118 angepaßt, wobei der hakenförmige Endabschnitt 48 in gekuppeltem Zustand den Exzenter 180 entlang etwa 150° umgreift.

Das untere Gehäuse 42 hat gemäß Fig. 2 im unteren Bereich eine Nut 124, die senkrecht zur Zeichenebene in Fig. 2 von einem Bolzen 126 durchsetzt ist, der in die Umfangswandungen des unteren Gehäuseteils 42 eingepreßt ist. Die Nut 124 mündet in der Stirnfläche 50. In Verlängerung der Nut 124 ist im oberen Gehäuse 140 ein Haken 128 befestigt, dessen hakenförmiger Eingriffsabschnitt 130 über die Stirnfläche 120 hinaus hin zum unteren Gehäuse 42 vorsteht. Der Eingriffsabschnitt 130 hat eine Einführnase 136, deren Breite B so gewählt ist, daß die Einführnase 136 in der Darstellung nach Fig. 2 oberhalb des Bolzens 26 in die Nut 124 einführbar oder herausbewegbar ist. An die Einführnase 136 schließt sich eine sich nach unten hin (Ansicht nach Fig. 2) öffnende Auflagenut 138 an, die in eine Querschulter 140 übergeht, die sich quer zur Längsachse des Hakens 128 erstreckt. Das Zusammenwirken des Hakens 128 mit dem Bolzen 126 wird im folgenden näher erläutert.

Gemäß Fig. 3 sind drei Bowdenzüge 22 des Fahrrades innerhalb des Unterrohres 8 verlegt. Um die Teilbarkeit des Rahmens 1 zu ermöglichen, müssen entsprechend diese Bowdenzüge teilbar ausgeführt sein. Beim gezeigten Ausführungsbeispiel ist hierfür die Kupplung 30 vorgesehen, über die jeweils zwei Bowdenzugabschnitte 22a, 22b im unteren Gehäuse 42 bzw. im oberen Gehäuse 40 formschlüssig verbindbar sind. Da die Bowdenzüge 22 identisch aufgebaut sind, wird im folgenden lediglich auf einen dieser Bowdenzüge eingegangen.

In einer Durchgangsbohrung einer Mittelwandung 142 des oberen Gehäuses 42 ist ein Kupplungsteil 144 befestigt, das an seinem linken Endabschnitt (Ansicht nach Fig. 2) eine Befestigungsbohrung 146 hat, in die ein Endabschnitt des Bowdenzugs 22a durch den Boden der Mittelwandung 42 hindurch einführbar und mittels Klemmschrauben 148 befestigbar ist. In der in Fig. 2 dargestellten Grundstellung liegt das Kupplungsteil 144 am Boden der Durchgangsbohrung der Mittelwandung 142 an und ist in Richtung zum oberen Gehäuseteil 40 verschiebbar geführt. Die Bewegung des Kupplungsteils 144 aus dem oberen Gehäuse 42 heraus ist mittels eines Anschlags 150 begrenzt, der in eine Längsnut 172 des Kupplungsteils 144 eintaucht und somit gleichzeitig als Verdrehsicherung dient.

In Fig. 4 sind die beiden Gehäuseteile 40, 42 in gekuppeltem Zustand dargestellt, wobei der Spannhebel 34 derart umgelegt ist, daß sein Betätigungsabschnitt am Außenumfang des oberen Gehäuseteils 40 anliegt.Aus der Darstellung gemäß Fig. 4 geht hervor, daß das Kupplungsteil 144 in gekuppeltem Zustand in Wirkeingriff mit einem Kupplungsteil 152 steht, das im oberen Gehäuse 40 gelagert ist. Die beiden Kupplungsteile 144 und 152 sind mit einander entsprechenden, eine Verzahnung bildenden Eingriffsabschnitten ausgebildet, wobei beim gezeigten Ausführungsbeispiel jedes Kupplungsteil 152, 144 an seinem Endabschnitt mit einem sich quer zur Längsachse erstrekkenden Eingriffsvorsprung 154 und einer entsprechend ausgebildeten Eingriffsnut 156 versehen sind. Die Axiallänge des Eingriffsvorsprungs 154 ist dabei etwas geringer als die Breite der Eingriffsnut 156 des zugeordneten Kupplungsteiles ausgebildet. Wie aus der Darstellung gemäß Fig. 4 entnehmbar ist, erstrecken sich die Eingriffsvorsprünge 154 in Radialrichtung über die Mittelachse der Kupplungsbauteile 152, 144 hinaus, so daß auch die Eingriffsnuten 156 entsprechend tief ausgebildet werden müssen.

In gekuppeltem Zustand liegen die Stirnflächen 158, 160 an den benachbarten Seitenwandungen der Eingriffsnuten 156 an. Der Längenunterschied A zwischen der Axiallänge der Eingriffsvorsprünge 154 und der Eingriffsnuten 156 läßt einen gewissen Leerhub (Spiel) entstehen, so daß sich bei einer Betätigung des Bowdenzuges das Kupplungsteil 152 in Pfeilrichtung (Fig. 4) bewegt und erst nach dem Leerhub A in Anlage an die Seitenfläche des Eingriffsvorsprungs 154 des Kupplungsteils 144 gelangt. Dieser Leerhub ist jedoch vergleichsweise gering gewählt, so daß er in der Praxis keine Bedeutung für den Schaltvorgang bzw. Bremsvorgang hat. Falls dies gewünscht ist, kann auf diesen Leerhub auch verzichtet werden. Der Längenunterschied A erleichtert jedoch das seitliche Lösen/Zusammenfügen der Kupplungsteile 152, 144.

Wie aus der Darstellung gemäß Fig. 2 entnehmbar ist, ist das Kupplungsteil 152 in einem Gehäuseeinsatz 162 geführt, der in einer Mittelwandung 164 des oberen Gehäuseteils 40 befestigt ist. Das Gehäuseteil 162 hat eine Führungsbohrung für das Kupplungsteil 152, die in eine Durchgangsbohrung 166 der Mittelwandung 144 mündet. Der Bowdenzug 22b durchsetzt die Durchgangsbohrung 166 und wird mit seinem Endabschnitt - wie beim Kupplungsteil 144 - mittels Klemmschrauben 148 in einer Befestigungsbohrung 146 festgelegt. Bei dem in Fig. 2 dargestellten Ausführungsbeispiel ist das Kupplungsteil 152 mittels einer an einer Stirnfläche der Durchgangsbohrung 166 abgestützten Druckfeder 168 zum anderen Kupplungsteil 144 hin vorgespannt. Die Axialbewegung des Kupplungsteils 152 ist wiederum durch einen Anschlag 170 begrenzt, der am in Fig. 2 rechten Endabschnitt des Gehäuseeinsatzes 162 befestigt ist und der mit einem Eingriffsabschnitt in eine Längsnut 172 des Kupplungsteils 152 eintaucht und somit auch als Verdrehsicherung dient. Die vorbeschriebene Kupplung 32 kann prinzipiell zur Verbindung jedweder Formteile eingesetzt werden und ist daher keinesfalls auf die Verwendung im Zusammenhang mit einem Fahrradrahmen beschränkt.

Anhand der folgenden Figuren sei die Funktion der vorbeschriebenen Bauelemente erläutert.

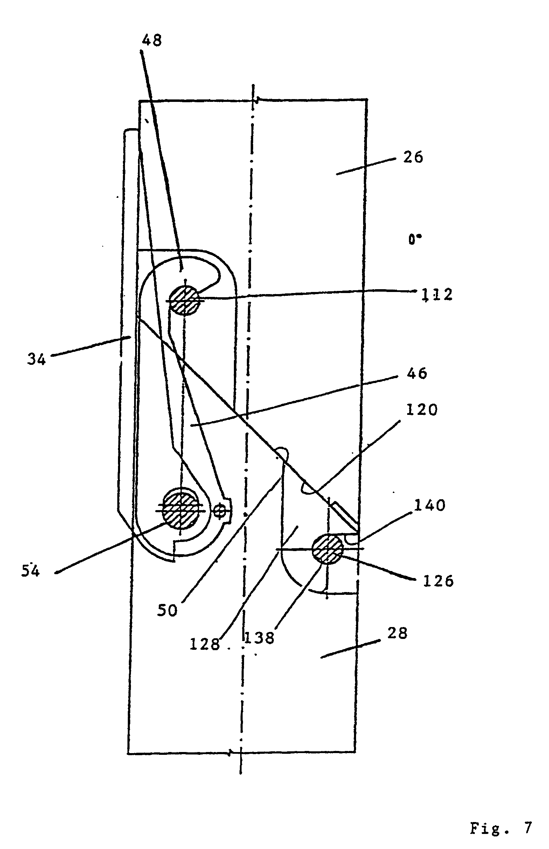

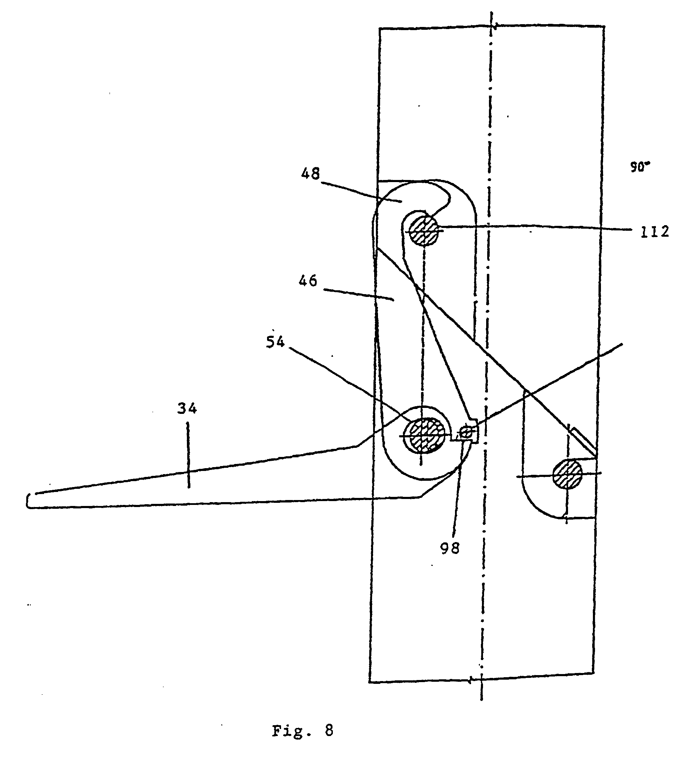

Fig. 7 zeigt den Rahmen 1 des Fahrrades in gekuppeltem Zustand, bei dem die beiden Rahmenteile 26 und 28 aneinander gekuppelt sind. Dabei liegen die beiden Unterrohrteile entlang der Stirnflächen 50 und 120 aneinander an. Der Haken 128 liegt dabei mit der Auflagenut 138 und einem Bereich der Querschulter auf dem Bolzen 126 auf. Der Spannhebel 34 ist zum Rahmenteil 26 hin verschwenkt, so daß sich der Spannhaken 46 in seiner Spannposition befindet, in der über diesen eine Spannkraft auf die Stirnflächen 50, 120 und über den Haken 128 auf den Bolzen 126 übertragbar ist. In dieser Schwenkposition befindet sich der Exzenter 54 mit seiner Mittelachse in einer am weitesten vom Spannbolzen 112 entfernten Position, so daß der hakenförmige Endabschnitt 48 mit dem Spannbolzen 112 verspannt ist. Zum Lösen der Verbindung wird der Spannhebel 34 um etwa 90° verschwenkt, so daß der Exzenter 54 ebenfalls um 90° gedreht wird und sich somit der Abstand zwischen der Mittelachse des Exzenters 54 und dem Spannbolzen 112 verringert. In der Darstellung gemäß Fig. 8 ist die Mittelachse des Exzenters 54 rechts von der Mittelachse der Exzenterwelle 56 angeordnet. Durch diese Drehbewegung des Exzenters 54 wird der hakenförmige Endabschnitt 48 des Spannhakens 46 vom Spannbolzen 112 abgehoben, so daß lediglich noch eine geringfügige Anlage entlang einer Kante des hakenförmigen Endabschnitts 48 vorliegt. Die Relativposition der beiden Unterrohrteile hat sich in der Darstellung nach Fig. 8 noch nicht gegenüber derjenigen in Fig. 7 geändert.

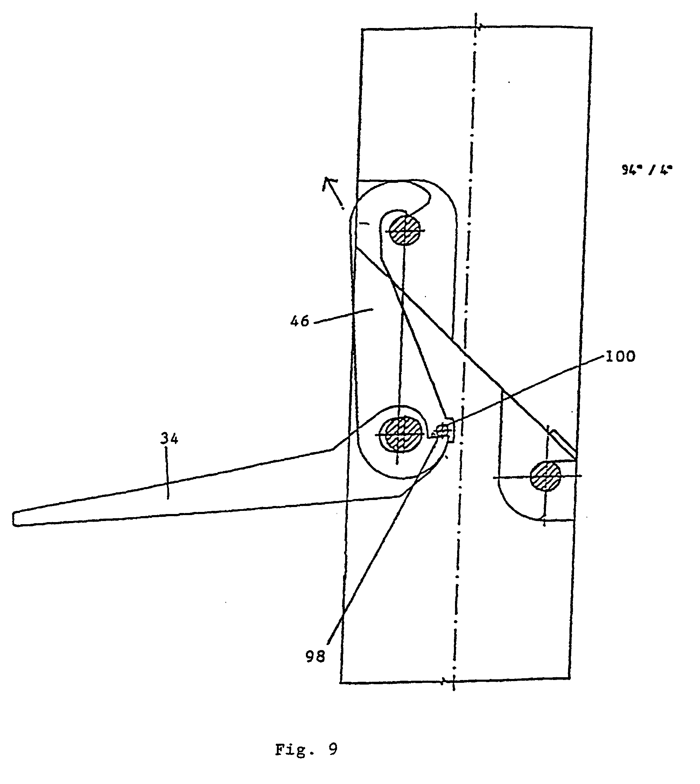

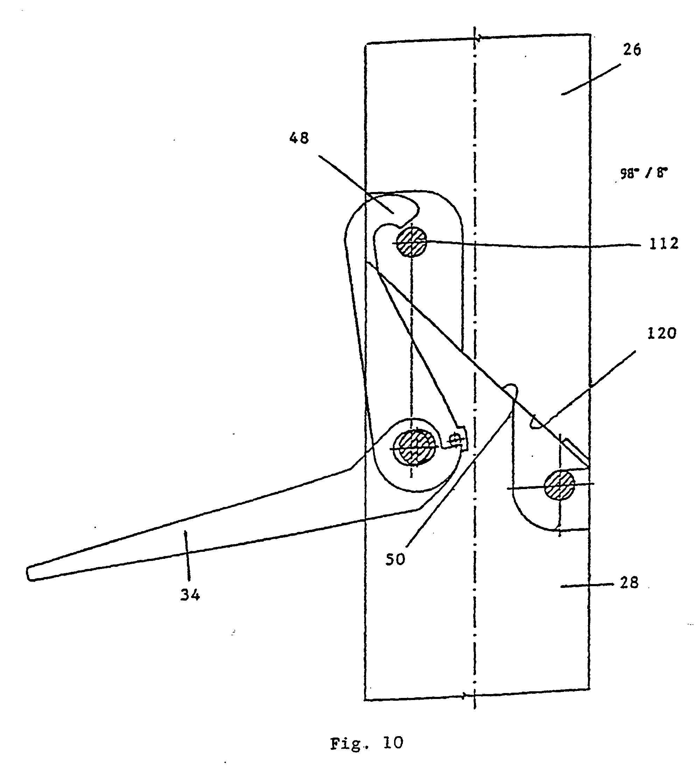

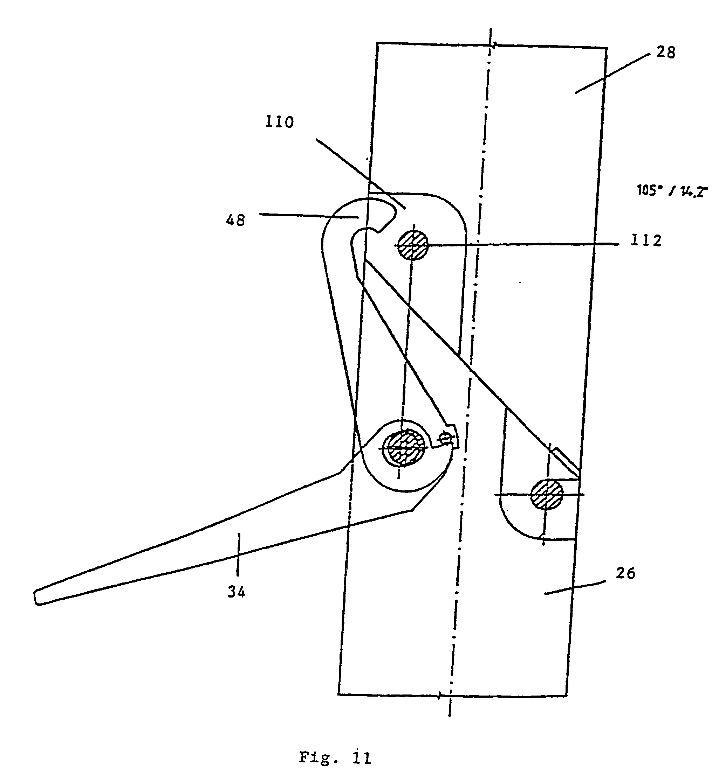

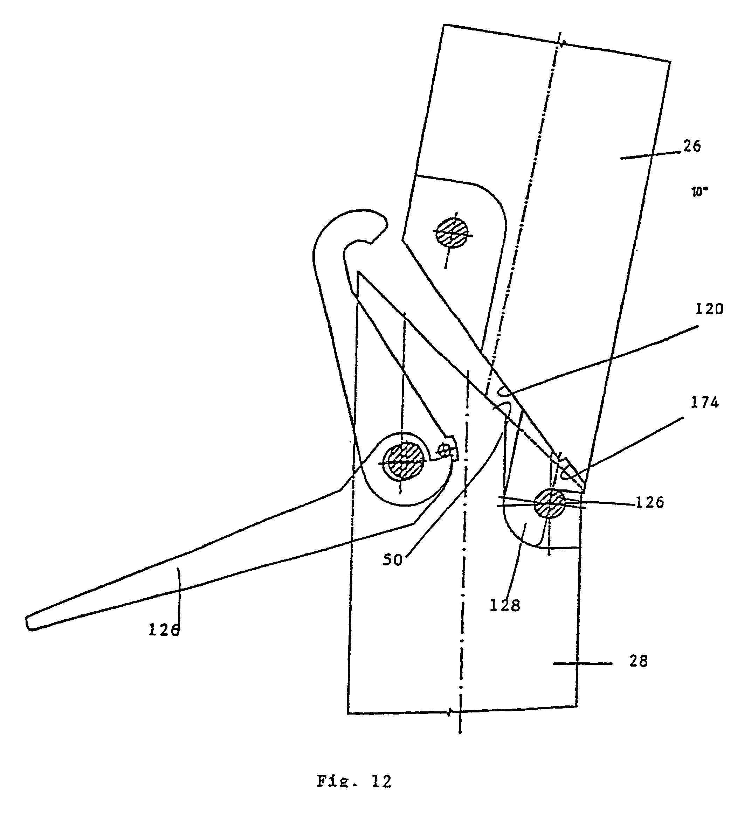

Beim weiteren Verschwenken des Spannhebels 34 läuft der Mitnehmernocken 98 auf den Anschlagbolzen 100 auf, so daß der Spannhaken 46 in der Darstellung nach Fig. 9 in Pfeilrichtung nach links verschwenkt wird. Beim weiteren Verschwenken (Fig. 10) des Spannhebels 34 wird der Eingriff zwischen dem Spannbolzen 112 und dem hakenförmigen Endabschnitt 48 des Spannhakens 46 gelöst, so daß über die Spannvorrichtung keine Kräfte mehr in Richtung auf die Stirnflächen 50, 120 übertragen werden. In der in Fig. 11 dargestellten Endschwenkstellung des Spannhebels 34 ist der Spannbolzen 112 vollständig freigegeben und der hakenförmige Endabschnitt 48 hat sich fast vollständig aus der Eingriffsausnehmung 110 heraus bewegt. Der Rahmen kann nun durch Verschwenken des Rahmenteils 26 um den Bolzen 126 abgehoben werden, wobei eine Ausnehmung 174 im rechts unten liegenden Teil (Ansicht nach Fig. 12) der Stirnfläche 120 eine kollisionsfreie Relativverschwenkung ermöglicht, so daß sich die beiden Stirnflächen 120, 50 keilförmig auseinander bewegen. Während dieser Schwenkbewegung liegt das Rahmenteil 26 über den Haken 128 auf dem Bolzen 126 auf. Die Rahmenteile 26, 28 lassen sich dann durch weiteres Verschwenken und Abheben des oberen Rahmenteils 26 vom unteren Rahmenteil 28 trennen und auf einem Dachträger befestigen oder in einem auch vergleichsweise kleinen Kofferraum oder einer Notsitzbank unterbringen.

Das Kuppeln der beiden Rahmenteile 26, 28 erfolgt in umgekehrter Weise, so daß zunächst der Haken 128 auf den Bolzen 126 aufgesetzt, anschließend die Stirnflächen 50, 120 durch Verschwenken in Anlage gebracht und dann die Spannkraft durch Verschwenken des Spannhebels 126 aufgebracht wird.

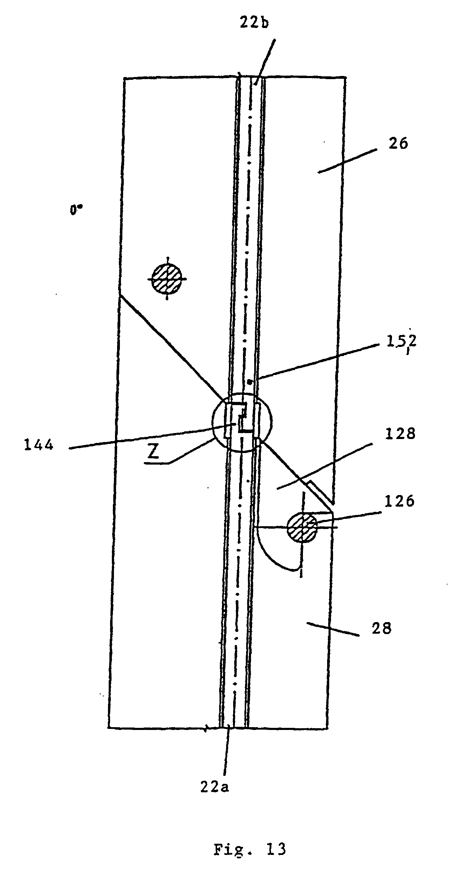

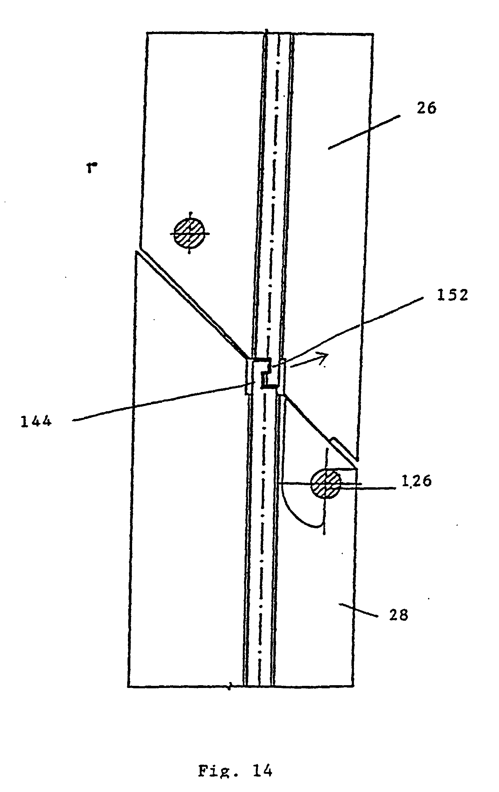

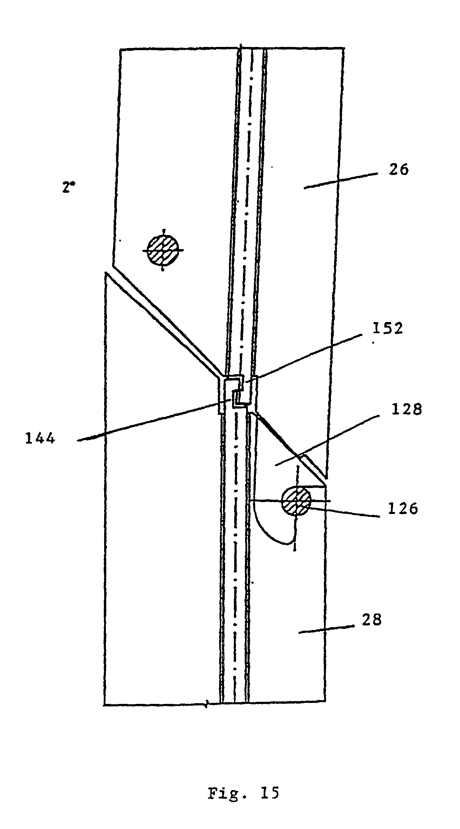

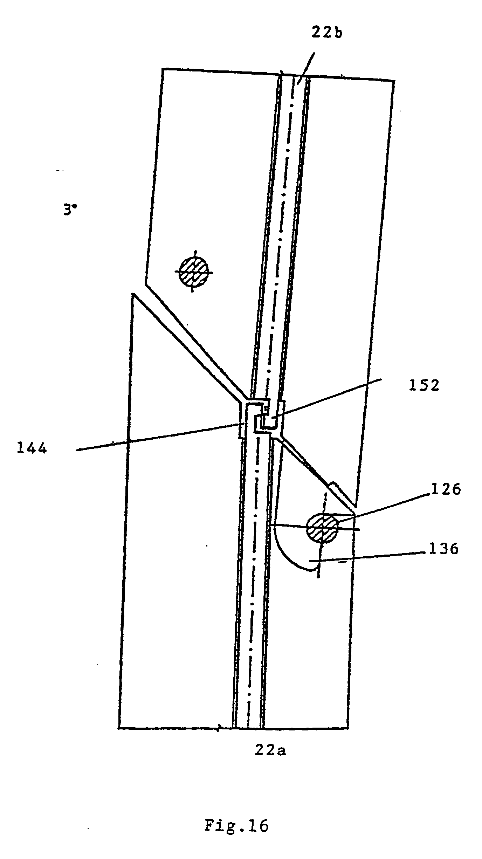

In den Figuren 13 bis 16 sind die beim vorbeschriebenen Bewegungsablauf erfolgenden Kupplungsvorgänge der beiden Kupplungsteile 152, 154 dargestellt. In verriegeltem Zustand, d.h. bei verschwenktem Spannhebel 34 (Fig. 7) befinden sich die Eingriffsvorsprünge 154 und Eingriffsnuten 156 in der in Fig. 4 dargestellten Weise in Eingriff miteinander, so daß bei einer Betätigung eines Bowdenzuges 22 die Axialbewegung des Teils 22b über die Kupplungsteile 152, 154 auf den Bowdenzug 22a übertragen werden. Dabei ist ein Maximalhub von etwa 40 mm vorgesehen, der durch die Länge der Ausnehmung 174 vorgegeben ist. Nach dem Lösen der Spannvorrichtung und einem ersten geringen Verschenken des Rahmenteils 26 gegenüber dem Rahmenteil 28 (siehe Fig. 14) um den Bolzen 126 werden die Eingriffsnuten 156 und Eingriffsvorsprünge 154 in Pfeilrichtung in Fig. 14 auseinander bewegt, wobei das Rahmenteil 26 um den Bolzen 126 bewegt wird. Das vorstehend erwähnte Spiel A zwischen den beiden Kupplungsteilen 152, 154 ermöglicht erst eine kollisionsfreie Verschwenkung, da andernfalls die entsprechenden Stirnflächen aneinander abgleiten würden, wobei die Druckfeder 168 ebenfalls einen gewissen Ausgleich bei der Schwenkbewegung erlaubt. Bei einem weiteren Verschwenken des Rahmenteils 26 mit Bezug zum Rahmenteil 28 werden die klauenförmigen Eingriffsabschnitte (Eingriffsvorsprünge 154, Eingriffsnuten 156) weiter auseinanderbewegt, wobei in Fig. 15 eine Relativverschwenkung des Rahmenteils 26 mit Bezug zum Rahmenteil 28 um 2° erfolgt ist. Bei einer Relativverschwenkung von 3° gemäß Fig. 16 ist der Eingriff zwischen den beiden Kupplungsteilen bereits aufgehoben, so daß die Bowdenzugabschnitte 22a, 22b entkuppelt sind. Das Rahmenteil 26 kann dann weiter verschwenkt werden, bis die Einführnase 36 vom Bolzen 126 lösbar ist.

Das Zusammenfügen erfolgt in umgekehrter Weise.

Die erfindungsgemäße Ausgestaltung der Kupplungseinrichtung mit den koaxial zu den Bowdenzügen 22a, 22b angeordneten Kupplungsteilen 144, 152 erlaubt eine äußerst kompakte Ausgestaltung der Bowdenzugführung, wobei praktisch keinerlei zusätzliche Hilfsmittel zur Verbindung der Kupplungsteile 152, 144 vorgesehen sein müssen, sondern lediglich eine Relativbewegung - hier eine Verschwenkung - ermöglicht werden muß, um die einander gegenüberliegenden Eingriffsabschnitte der Kupplungsteile 152, 144 miteinander in Wirkverbindung zu bringen. Diese Kupplungseinrichtung läßt sich auch bei anderen Verbindungen einsetzen.

Um ein versehentliches Lösen der Verbindungseinrichtung zu verhindern, kann der Spannhebel 34 mit einer Druckknopfsicherung oder einer sonstigen Sicherung versehen werden. Des weiteren kann ein geeignetes Schloß ausgebildet werden, um ein Trennen des Rahmens in zwei Rahmenteile 26, 28 zu vermeiden. Selbst bei versehentlich gelöstem Spannhebel 34 können sich die beiden Rahmenteile 26, 28 nicht auseinander bewegen, da durch das Gewicht des Fahrers der Haken 128 auf den Bolzen 126 gedrückt und die beiden Stirnflächen 50, 120 aneinander gepreßt werden. Der Haken 128 ist derart ausgebildet, daß ein Axialversatz der beiden Rahmenteile 26, 28 ausgeschlossen ist.

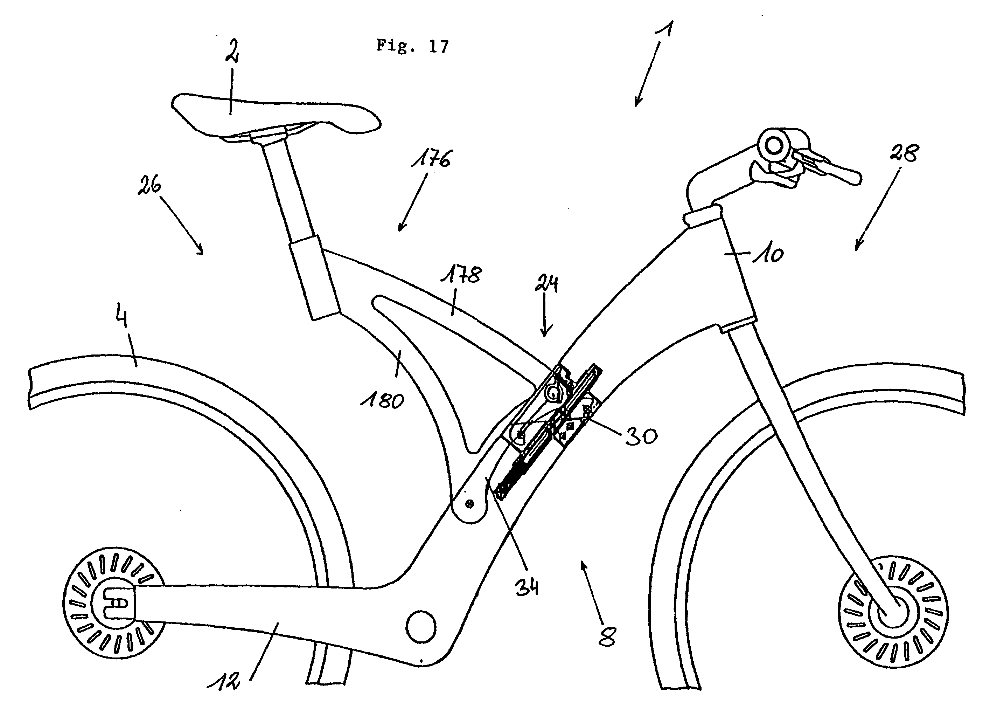

Fig. 17 zeigt eine weitere Ausgestaltungsform eines erfindungsgemäßen Zweiradrahmens, bei dem ein versehentliches Lösen der Verbindungseinrichtung auf besonders einfache, sichere und elegante Art und Weise verhindert werden kann, ohne hierbei eine Druckknopfsicherung oder eine sonstigen Sicherung oder ein Schloß verwenden zu müssen, um ein Trennen des Rahmens in die zwei Rahmenteile zu vermeiden.

In den Figuren 17 bis 24 sind Teile oder Abschnitte, welche zu Teilen oder Abschnitten in den Fig. 1 bis 16 gleich oder funktionell äquivalent sind, mit den gleichen Bezugszeichen versehen und eine nochmalige detaillierte Beschreibung hiervon erfolgt nicht.

Fig. 17 zeigt eine schematische Darstellung der zweiten Ausführungsform des Rahmens 1 für ein Sportrad. Der Sattel 2 und die Lagerung des Hinterrades 4 sind wieder an frei auskragenden Rahmenendabschnitten angeordnet, die somit eine gewisse Eigenelastizität aufweisen.

Der Rahmen 1 ist im wesentlichen L-förmig mit dem vom Lenkkopf 10 aus schräg nach unten/hinten verlaufenden Unterrohr 8 und der im wesentlichen horizontal verlaufenden Hinterradaufnahme 12.

Der Sattel 2 ist - wie bereits erwähnt - am freien Ende einer Sattelstrebe 176 angeordnet, welche sich im wesentlichen mittig von dem Unterrohr 8 aus erstreckt.

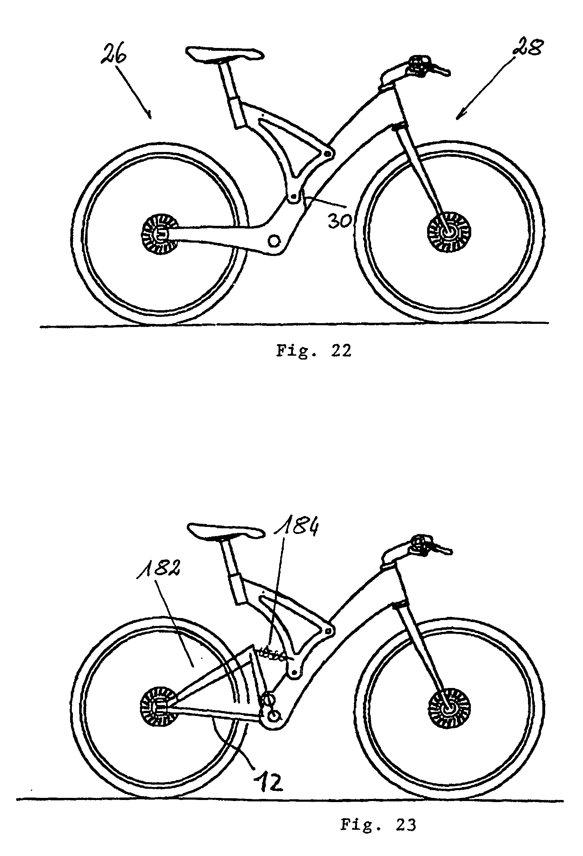

Der Rahmen 1 ist wieder mit der Verbindungseinrichtung 24 versehen, über die das Unterrohr 8 in zwei Unterrohrteile trennbar ist, so daß der Rahmen 1 in die zwei vollständig getrennten Rahmenteile 26 und 28 (Fig. 20) zerlegbar ist. Auch hier sind die Bowdenzüge im Bereich der Trennebene 30 des Unterrohrs 8 bevorzugt mit den bereits weiter oben beschriebenen lösbaren Kupplungen oder Kupplungseinrichtungen versehen.

Die Betätigung der Verbindungseinrichtung 24 erfolgt mittels des Spannhebels 34, der am oberen Rahmenteil 28 gelagert ist und der im Schließzustand, d.h. bei zusammengekuppelten Rahmenteilen 26 und 28 zum unteren Rahmenteil 26 hin verschwenkt ist und an dessen Außenumfangsfläche anliegt.

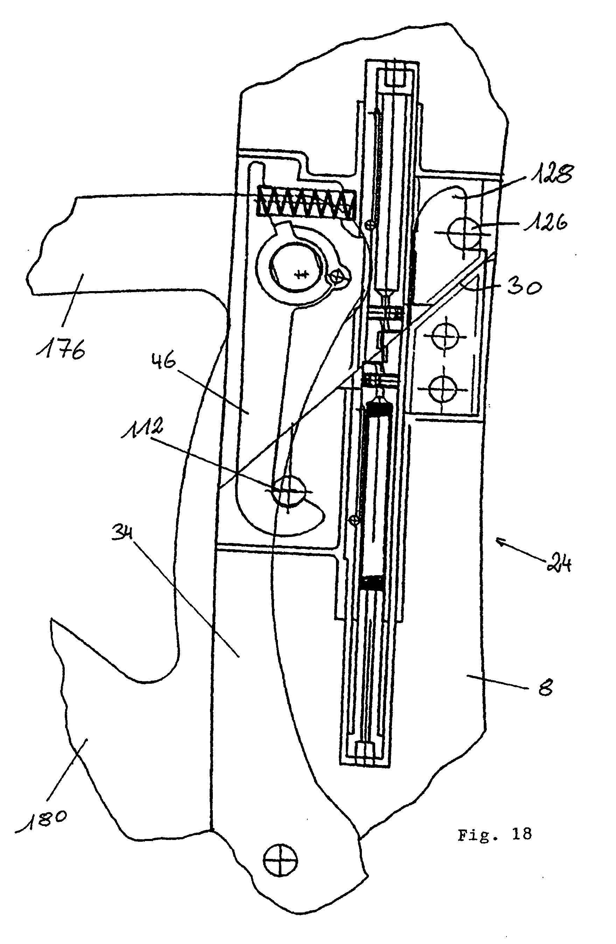

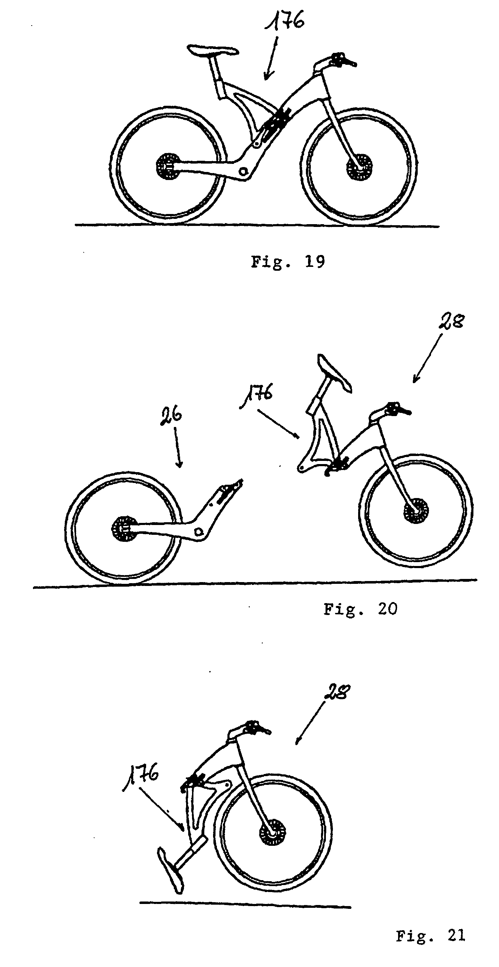

Wie aus Fig. 17 und insbesondere Fig. 18 hervorgeht, ist die Sattelstrebe 176 in Form eines Dreiecks aufgebaut mit zwei in Richtung des Rahmenendabschnittes bzw. des dortigen Sattels 2 verlaufenden Auslegern 178 und 180, welche am dem Endabschnitt gegenüberliegenden Ende im Bereich des Unterrohrs 8 durch den als Niederhalter wirkenden Spannhebel 34 miteinander verbunden sind. Eine Schwenkbewegung der Sattelstrebe 176 in Fig. 17 in Uhrzeigerrichtung um die Längsachse des Exzenters herum bewirkt eine gleichzeitige Mitnahme des Spannhebels 34 und damit eine - wie oben erläuterte - Öffnungsbewegung des Spannhakens, so daß die beiden Rahmenteile voneinander getrennt werden können. Dieser Ablauf ist auch in den Fig. 19 bis 21 dargestellt, wobei Fig. 19 die Verbindungseinrichtung im verbundenen Zustand analog zu Fig. 18 zeigt, Fig. 20 die beiden voneinander getrennten Rahmenteile zeigt und Fig. 21 das vordere Rahmenteil alleine zeigt. Man erkennt speziell aus Fig. 21, daß nach erfolgtem Trennvorgang der beiden Rahmenteile die Sattelstrebe 176 mit dem sich daran befindlichen Sattel 2 um die Achse des Exzenters herum in Richtung des Vorderrades 20 geschwenkt werden kann, so daß das Packmaß speziell des vorderen Rahmenteiles wesentlich verringert ist.

Im verbundenen Zustand der beiden Rahmenteile 26 und 28 gemäß Fig. 19 wirkt das über die Sattelstrebe 176 auf die Verbindungseinrichtung wirkende Gewicht einer auf dem Sattel 2 sitzenden Person, daß der Niederhalter bzw. Spannhebel 34 in feste Anlage mit dem Unterrohr 8 gedrückt wird. Auch bei hohen auf die Verbindungseinrichtung wirkenden Belastungen, beispielsweise Stößen oder Schlägen, wie sie z.B. bei Mountainbikes auftreten, ist die Verbindungseinrichtung somit vor einem ungewollten Öffnen durch eine Schwenkbewegung des Spannhebels 34 geschützt.

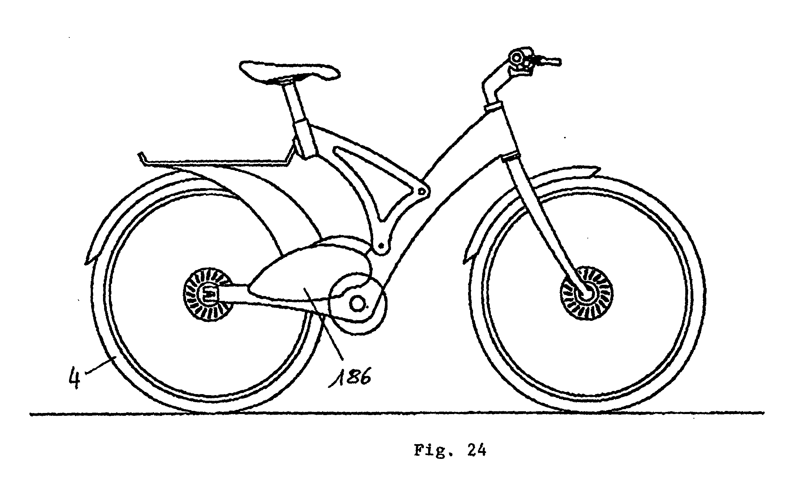

Wie aus den Figuren 22 bis 24 hervorgeht, ist der erfindungsgemäße Rahmen nicht auf die in den Figuren 1 bis 21 dargestellten Ausführungsbeispiele beschränkt, sondern kann auf unterschiedliche Weise abgewandelt werden. So ist beispielsweise im Ausführungsbeispiel von Fig. 22 die Trennebene zwischen den beiden Rahmenteilen 26 und 28 nicht horizontal verlaufend, sondern im wesentlichen vertikal. Fig. 23 zeigt ein Abwandlungsbeispiel, bei dem die Hinterradaufnahme 12 über ein entsprechendes Gestänge 182 und eine Feder 184 federnd an dem hinteren oder unteren Rahmenteil 26 gelagert ist. Fig. 24 zeigt ein Ausführungsbeispiel eines sogenannten Motor-Bikes, bei dem zusätzlich oder alternativ zu dem Antrieb über Pedale das Hinterrad 4 über einen Elektro- oder Verbrennungsmotor 186 angetrieben werden kann.

Bei all diesen Modifikationen oder Abwandlungsformen verbleibt das vordere Rahmenteil 28 unverändert; es wird lediglich das hintere Rahmenteil 26 entsprechend modifiziert oder abgeändert, was von wirtschaftlichen Gesichtspunkten her besonders vorteilhaft ist.

Durch die schwenkbare Lagerung der Sattelstrebe 176 an dem vorderen Rahmenteil 28 wird das Packmaß dieses vorderen Rahmenteiles in besonders vorteilhafter Weise noch weiter verringert.

Dadurch, daß sich der als Niederhalter wirkende Spannhebel 34 an der Sattelstrebe 176 befindet, kann dieser Spannhebel 34 aufgrund der Hebelwirkung über die Strebe 176 mit vergleichsweise geringen Kräften auf- und zubewegt werden. Gleichzeitig können hierdurch bei einer Schließbewegung des Spannhebels 34 entsprechend hohe Haltekräfte auf den Spannhaken aufgebracht werden.

Die Kombination Spannhebel und Sattelstütze läßt sich selbstverständlich auch bei Kupplungseinrichtungen verwenden, die einen anderen Aufbau als die vorbeschriebene aufweisen. Die Anmelderin behält sich vor, auf diese Doppelfunktion (Spannen/Abstützen) einen eigenen Anspruch bzw. eine Teilanmeldung zu richten.

Offenbart ist ein Rahmen für ein Zweirad, bei dem die Stirnflächen eines Rahmenteiles durch eine Spanneinrichtung gegeneinander verspannbar sind, so daß ein Stützelement auf einem Widerlager abgestützt ist und somit die Rahmenteile kraft- und formschlüssig miteinander verbunden sind. Offenbart ist des weiteren eine Kupplungseinrichtung zur Verbindung zweier Bauteile.

## Patentansprüche

1. Teilbarer Zweiradrahmen, mit einer Verbindungseinrichtung (24) zum lösbaren Zusammenfügen zweier Rahmenteile (26,28) an einer Trennebene (30), mit einem Widerlager mit einem Stützelement (128), das sich von einem Rahmenteil (26) durch eine die Trennebene (30) enthaltende Ebene hindurch zu einem Auflager (126) im anderen Rahmenteil (28) erstreckt, und einer Spanneinrichtung (34) zum Verspannen der beiden Rahmenteile (26, 28), so dass das Stützelement (128) am Auflager (126) abgestützt ist und die beiden Rahmenteile (26,28) stirnseitig aneinander liegen, wobei die Trennebene (30) ein Unterrohr (8) im Zweiradrahmen durchsetzt **dadurch gekennzeichnet, dass**
- das Stützelement ein in einem Unterrohrteil befestigter Haken (128) und das Widerlager ein im anderen Unterrohlteil angeordneter Bolzen (126) ist, der vom Haken (128) abschnittsweise umgriffen ist und
- dass der umgreifende Abschnitt (130) des Hakens (128) eine in Richtung der Zweiradhochachse wirkende Kraftkomponente auf den Bolzen (126) überträgt.

2. Zweiradrahmen nach Anspruch 1, **dadurch gekennzeichnet, daß** der umgreifende Abschnitt (130) den Bolzen (126) entlang maximal 180°, vorzugsweise 150° umgreift.

3. Zweiradrahmen nach Anspruch 1 oder 2, **dadurch gekennzeichnet, daß** eine Stirnfläche (120) eines Rahmenteils (26) im Bereich des Widerlagers (126, 128) bis zum benachbarten Umfangsabschnitt mit einer Ausnehmung (174) versehen ist.

4. Zweiradrahmen nach einem der vorhergehenden Ansprüche, **dadurch gekennzeichnet, daß** die Spanneinrichtung einen an einem Rahmenteil (28) schwenkbar gelagerten Spannhaken (46) hat, dessen Hakenabschnitt (48) in Eingriff mit einem am anderen Rahmenteil (26) befestigten Spannbolzen (112) bringbar ist.

5. Zweiradrahmen nach Anspruch 4, **dadurch gekennzeichnet, daß** der Spannhaken (46) auf einer Exzenterwelle (56) gelagert ist, so daß durch Verdrehen der Exzenterwelle (56) der Spannbolzen (112) mit einer Spannkraft beaufschlagbar ist.

6. Zweiradrahmen nach Anspruch 5, **gekennzeichnet durch** einen Spannhebel (34) zur Betätigung der Exzenterwelle (56), der mit zwei Lagerabschnitten (66, 68) an den beiden Endabschnitten (78, 80) der Exzenterwelle (56) befestigt ist.

7. Zweiradrahmen nach Anspruch 6, **dadurch gekennzeichnet, daß** der Spannhebel (34) zum Verriegeln hin zum anderen Rahmenteil (26) verschwenkbar ist, so daß er mit einem Anlageabschnitt in eine Ausnehmung (36) des anderen Rahmenteils (28) eintaucht.

8. Zweiradrahmen nach einem der vorhergehenden Ansprüche, **dadurch gekennzeichnet, daß** der Rahmen (1) aus hochfestem Kunststoff hergestellt ist und die Spannvorrichtung in Gehäuseteilen (40, 42) aus Metall gelagert ist, die jeweils eine Stirnseite der Rahmenteile (26, 28) ausbilden.

9. Zweiradrahmen nach einem der vorhergehenden Ansprüche, **dadurch gekennzeichnet, daß** im Rahmen (1) Betätigungseinrichtungen (22) für die Bremse und Schaltung geführt sind, wobei die Verbindungseinrichtungen eine Kupplung (32) für jede Betätigungseinrichtung (22) haben.

10. Zweiradrahmen nach Anspruch 9, **dadurch gekennzeichnet, daß** die Betätigungseinrichtungen Bowdenzüge (22) sind und die Kupplungen jeweils zwei Kupplungsteile (144, 152) mit ineinandergreifenden Klauen (154, 156) haben, die durch eine Relativbewegung der Rahmenteile (26, 28) in Wirkeingriff bringbar oder entkoppelbar sind.

11. Zweiradrahmen nach Anspruch 10, **dadurch gekennzeichnet, daß** eines der Kupplungsteile (15) in Längsrichtung des Rahmenteils (26) in einer Führungsbohrung geführt und mittels einer Feder (168) hin zum anderen Kupplungsteil (144) vorgespannt ist.

12. Zweiradrahmen nach Anspruch 10 oder 11, **dadurch gekennzeichnet, daß** die Kupplungsteile (144, 152) einen Eingriffsvorsprung (154) und eine Eingriffsnut (156) haben, die in Wirkeingriff mit einer entsprechenden Eingriffsnut (156) bzw. einem Eingriffsvorsprung (154) des anderen Kupplungsteils (144, 152) bringbar sind.

13. Zweiradrahmen nach einem der Ansprüche 10 bis 12, **dadurch gekennzeichnet, daß** die Kupplungsteile (144, 152) durch eine Relativverschwenkung der Rahmenteile (26, 28) um das Widerlager (126, 128) entkoppelbar sind.

14. Zweiradrahmen nach einem der Ansprüche 6 bis 13, **dadurch gekennzeichnet, daß** die Spanneinrichtung im zusammengefügten Zustand der beiden Rahmenteile (26, 28) von einem Niederhalter kraftbeaufschlagt ist, welcher mittel- oder unmittelbar mit einer Sattelstrebe (176) des Zweiradrahmens in Verbindung steht.

15. Zweiradrahmen nach Anspruch 14, **dadurch gekennzeichnet, daß** der Spannhebel (36) den Niederhalter bildet, der mittel- oder unmittelbar mit der Sattelstrebe (176) des Zweiradrahmens in Verbindung steht.

16. Zweiradrahmen nach Anspruch 15, **dadurch gekennzeichnet, daß** der Spannhebel (36) zum Verriegeln zusammen mit der Sattelstrebe (176) zum anderen Rahmenteil hin verschwenkbar ist, so daß er mit einem Anlageabschnitt in eine Ausnehmung des anderen Rahmenteils eintaucht.

17. Zweiradrahmen nach Anspruch 1, **dadurch gekennzeichnet, dass** die Trennebene etwa 45° zur Unterrohrlängsachse angestellt ist.

## Claims

1. A disassemblable bicycle frame, including connecting means (24) for releasably joining together two frame parts (26, 28) along a plane of separation (30), comprising an abutment with a supporting member (128) which extends from one frame part (26) through a plane containing the plane of separation (30) as far as a bearing (126) in the other frame part (28), and tensioning means (34) for bracing said two frame parts (26, 28), so that said supporting member (128) is supported against said bearing (126), and said two frame parts (26, 28) contact each other by their front faces, **characterised in that**
- said supporting member is a hook (128) fastened in one down tube portion, and said abutment is a bolt (126) arranged in said other down tube portion, a section of which is encompassed by said hook (128); and
- **in that** said encompassing portion (130) of said hook (128) transfers a force component acting in the direction of the vertical axis of the bicycle to said bolt (126).

2. The bicycle frame in accordance with claim 1, **characterised in that** said encompassing portion (130) encompasses said bolt (126) through 180° at maximum, preferably 150°.

3. The bicycle frame in accordance with claim 1 or 2, **characterised in that** a front surface (120) of a frame part (26) is provided with a recess (174) in the range of said abutment (126, 128) as far as the adjacent circumferential portion.

4. The bicycle frame in accordance with any one of the preceding claims, **characterised in that** said tensioning means include a tensioning hook (46) pivotally mounted on a frame part (28), the hook portion (48) of which may be taken into engagement with a tensioning bolt (112) fastened on said other frame part (26).

5. The bicycle frame in accordance with claim 4, **characterised in that** said tensioning hook (46) is mounted on an eccentric shaft (56), so that a tensioning force may be applied to said tensioning bolt (112) by turning said eccentric shaft (56).

6. The bicycle frame in accordance with claim 5, **characterised by** a tensioning lever (34) for actuation of said eccentric shaft (56), which is fastened on the two end portions (78, 80) of said eccentric shaft (56) with the aid of two mounting sections (66, 68).

7. The bicycle frame in accordance with claim 6, **characterised in that** said tensioning lever (34) may be pivoted towards said other frame part (26) for locking so that one contact portion thereof enters into a recess (36) of said other frame part (28).

8. The bicycle frame in accordance with any one of the preceding claims, **characterised in that** said frame (1) is manufactured of high-strength plastic, and said tensioning device is mounted in housing parts (40, 42) of metal each forming one front face of said frame parts (26, 28).

9. The bicycle frame in accordance with any one of the preceding claims, **characterised in that** actuating means (22) for the brake and the gear-shift mechanism are guided within said frame (1), said connecting means comprising one coupler (32) for each actuating means. (22).

10. The bicycle frame in accordance with claim 9, **characterised in that** said actuating means are Bowden wires (22), and said couplers each comprise two coupling members (144, 152) having meshing claws (154, 156) which may be taken into operational engagement, or disengaged, by a relative movement of said frame parts (26, 28).

11. The bicycle frame in accordance with claim 10, **characterised in that** one of said coupling members (15) is guided inside a guide bore in the longitudinal direction of said frame part (26) and biased towards said other coupling member (144) by means of a spring (168).

12. The bicycle frame in accordance with claim 10 or 11, **characterised in that** said coupling members (144, 152) include an engagement projection (154) and an engagement groove (156) which may be made to operationally engage a corresponding one of an engagement groove (156) and an engagement projection (154) of said other coupling member (144, 152).

13. The bicycle frame in accordance with any one of claims 10 to 12, **characterised in that** said coupling members (144, 152) may be uncoupled by a relative rotation of said frame parts (26, 28) about said abutment (126, 128).

14. The bicycle frame in accordance with any one of claims 6 to 13, **characterised in that** said tensioning means, in the assembled condition of said two frame parts (26, 28), receive a force from a depressor indirectly or directly communicating with a seat post (176) of said bicycle frame.

15. The bicycle frame in accordance with claim 14,
**characterised in that** said tensioning lever (36) constitutes said depressor indirectly or directly communicating with said seat post (176) of said bicycle frame.

16. The bicycle frame in accordance with claim 15, **characterised in that** said tensioning lever (36) may be pivoted, together with said seat post (176), towards said other frame part for locking, so as to enter into a recess of said other frame part with a contact portion thereof.

17. The bicycle frame in accordance with claim 1, **characterised in that** the plane of separation (30) extends through a down tube (8) in said bicycle frame while having an inclination of about 45° relative to the center axis of said down tube;

## Revendications

1. Cadre de deux-roues dissociable avec un dispositif de raccordement (24) pour l'assemblage détachable de deux parties du cadre (26, 28) à un niveau de séparation (30), avec un palier de butée muni d'un élément de soutien (128) qui s'étend, à travers un niveau où se situe le niveau de séparation (30), d'une partie du cadre (26) vers un appui (126) situé sur l'autre partie du cadre (28), et avec un dispositif de tension (34) pour serrer les deux parties du cadre (26, 28) de façon à ce que l'élément de soutien (128) soit soutenu sur l'appui (126) et les deux parties frontales du cadre (26, 28) soient placées l'une contre l'autre, le niveau de séparation (30) traversant un tube inférieur (8) dans le cadre de deux-roues, **caractérisé en ce que**
- l'élément de soutien est un crochet (128) fixé dans une partie du tube inférieur et le palier de butée est un boulon (126) disposé sur une autre partie du tube inférieur qui est partiellement encerclée par le crochet (128) et
- la portion encerclante (130) du crochet (128) transmet sur le boulon (126) une composante de force agissant dans la direction de l'axe vertical du deux-roues.

2. Cadre de deux-roues selon la revendication 1, **caractérisé en ce que** la portion encerclante (130) appréhende 180° maximum, de préférence 150°, le long du boulon (126).

3. Cadre de deux-roues selon la revendication 1 ou 2, **caractérisé en ce qu'**une face frontale (120) d'une partie du cadre (26) est pourvue d'une ouverture (174) dans la zone du palier de butée (126, 128) jusqu'à la portion circonférentielle voisine.

4. Cadre de deux-roues selon l'une quelconque des revendications précédentes, **caractérisé en ce que** le dipositif de tension possède un crochet de tension (46) fixé de façon pivotante sur une partie du cadre (28) et dont la section de crochet (48) est amenée en position d'engrènement grâce à un boulon de tension (112) fixé sur l'autre partie du cadre (26).

5. Cadre de deux-roues selon la revendication 4, **caractérisé en ce que** le crochet de tension (46) est situé sur un arbre excentrique (56) de telle façon que lors de la rotation de l'arbre excentrique (56), le boulon de tension (112) peut être soumis à une tension.

6. Cadre de deux-roues selon la revendication 5, **caractérisé par** un levier tendeur (34) pour actionner l'arbre excentrique (56) qui est fixé grâce à deux sections d'appui (66, 68) sur les deux extrémités (78, 80) de l'arbre excentrique (56).

7. Cadre de deux-roues selon la revendication 6, **caractérisé en ce que** le levier tendeur (34) de verrouillage bascule vers l'autre partie (26) du cadre de telle façon qu'il s'enfonce avec une partie de montage dans une ouverture (36) de l'autre partie du cadre (28).

8. Cadre de deux-roues selon l'une quelconque des revendications précédentes, **caractérisé en ce que** le cadre (1) est fabriqué en matière plastique très résistante et le dispositif de tension est positionné dans les parties métalliques du carter (40, 42) qui forment chacune une face frontale des parties du cadre (26, 28).

9. Cadre de deux-roues selon l'une quelconque des revendications précédentes, **caractérisé en ce que** dans le cadre (1), on amène des dispositifs d'actionnement (22) pour les freins et le changement de vitesse, les dispositifs de raccordement possédant un arrimage (32) pour chaque dispositif d'actionnement (22).

10. Cadre de deux-roues selon la revendication 9, **caractérisé en ce que** les dispositifs d'actionnement sont des câbles Bowden (22) et les arrimages possèdent chacun deux parties pour l'arrimage (144, 152) avec des griffes qui s'engrènent l'une dans l'autre (154, 156) et qui peuvent être amenées ou dégagées de l'engrènement par un mouvement relatif des parties du cadre (26, 28).

11. Cadre de deux-roues selon la revendication 10, **caractérisé en ce qu'**une partie de l'arrimage (15) est guidée à travers un orifice de guidage dans le sens longitudinal de la partie du cadre (26) et est mise en état de pré-tension vers l'autre partie de l'arrimage (144) au moyen d'un ressort (168).

12. Cadre de deux-roues selon la revendication 10 ou 11, **caractérisé en ce que** les parties de l'arrimage (144, 152) possèdent une proéminence d'engrènement (154) et une rainure d'engrènement (156) qui sont amenées dans la position d'engrènement par une rainure d'engrènement (156) et/ou une proéminence d'engrènement (154) correspondantes sur l'autre partie de l'arrimage (144, 152).

13. Cadre de deux-roues selon l'une quelconque des revendications 10 à 12, **caractérisé en ce que** les parties de l'arrimage (144, 152) peuvent être dégagées par une rotation relative des parties de l'arrimage (26, 28) autour de l'appui (126, 128).

14. Cadre de deux-roues selon l'une quelconque des revendications 6 à 13, **caractérisé en ce que** le dispositif de tension, en l'état assemblé des deux parties du cadre (26, 28), subit la force d'un serre-flan qui est relié indirectement ou directement à une tige de selle (176) du cadre pour deux-roues.

15. Cadre de doux-roues selon la revendication 14, **caractérisé en ce que** le levier tendeur (36) forme le serre-flan qui est relié indirectement ou directement à la tige de selle (176) du cadre pour deux-roues.

16. Cadre de deux-roues selon la revendication 15, **caractérisé en ce que** le levier tendeur (36) de verrouillage peut être orienté, avec la tige de selle (176), vers l'autre partie du cadre de telle façon qu'il s'enfonce avec une partie de montage dans une ouverture de l'autre partie du cadre.

17. Cadre de deux-roues selon la revendication 1, **caractérisé en ce que** le niveau de séparation est positionné à environ 45° par rapport à l'axe longitudinal du tube inférieur.
